# EUROPEAN PATENT APPLICATION

(11) **EP 1 798 025 A1**
(43) Date of publication of application: **20.06.2007**
(21) Application number: 05400043.5
(22) Date of filing: 14.12.2005
(51) Int. Cl.: B31B 19/88, B31F 1/07, A24F 23/02, B65B 9/08, B65B 61/02

(54) **Method of embossing a packaging film and apparatus therefor**

(71) Applicant: Imperial Tobacco R.Y.O. B.V., 8501 ZA Joure (NL)
(72) Inventor: Luyben-van Gerwen, Marja, 9001 HD Grou (NL); Hoekstra, Eric, 8601 CW Sneek (NL)
(74) Representative: UEXKÜLL & STOLBERG

(57) **Abstract**

In a method of embossing a packaging film used for tobacco pouches (1), the packaging film is unwound from a reel and is provided, in sections, with embossings (20) during the feeding to and/or in a packaging film processing device and/or packaging device adapted to package a product in sections of the packaging film.

## Description

The invention relates to a method of embossing a packaging film, in particular a packaging film used for tobacco pouches, and an apparatus to perform that method, and an embossed tobacco pouch.

EP 0 940 093 A1 discloses a package for tobacco comprising a substantially rectangular rigid bag provided with a front side and a rear side which are interconnected on three lateral sides. The front side and/or the rear side consist of a preformed plastic sheet which can be shaped by vacuum forming. These sides can be provided with an embossing.

Usually, tobacco pouches are made from a flexible packaging film, which is folded and welded at its side edges. The packaging film is delivered as a continuous web wound on a reel, already printed with any desired information and labels. In the manufacturing process, it is unwound and fed to a packaging film processing device or pouch manufacturing device, where the packaging film is provided with one fold, forming, in a continuous arrangement of tobacco pouches, the lower edge of a tobacco pouch having a front side, a back side and a flap extending from the upper edge of the back side. During predetermined intervals, the packaging film is not moved, so that transverse (lateral) weldings can be made in the continuous arrangement of tobacco pouches. These weldings form the side edges of the tobacco pouches after the film has been cut in the middle of the weldings in order to separate the individual tobacco pouches in later steps of the procedure.

One or more embossings in a tobacco pouch would have a decorative effect. However, a pre-fabricated web of a packaging film provided with printed information and labels and also provided with embossings in the sections later to form individual pouches could not be wound on a roll. Winding would have a flattening effect to the embossings and, unless the embossings were evenly distributed across the packaging film web, concentrations of embossings to certain areas of the web would result in a non-constant diameter of the reel, which could not be handled in practice.

It is the object of the invention to provide a method of embossing a packaging film, in particular a packaging film used for tobacco pouches, which can be easily integrated into existing processes and which allows a handling of packaging film reels in a convenient way.

This problem is solved by the method of embossing a packaging film defined in claim 1. Claim 22 refers to an apparatus adapted to perform that method, and claims 30 and 31 relate to a tobacco pouch. Advantageous versions of the invention follow from the dependent claims.

The method according to the invention of embossing a packaging film is particularly suitable to a packaging film used for tobacco pouches. The packaging film is unwound from a reel and is provided, in sections, with embossings while it is fed to a packaging film processing device (and/or a packaging device adapted to package a product in sections of the packaging film), and/or it is provided with embossings while it is in this device or these devices and it is processed therein.

The method according to the invention allows for the use of standard reels of packaging films. Moreover, it generally also allows for the use of standard equipment for pro-cessing the packaging film and packaging a product in sections of the packaging film. This standard equipment has to be slightly modified by the addition of one or more than one embossing unit in which the packaging film is embossed at desired locations after being unwound from the reel. Preferably, the embossings are not superposed to any legible information printed on the packaging film. The modifications to the existing equipment generally are relatively less expensive so that the method according to the invention can be easily introduced into a running production line.

In an advantageous embodiment of the invention, the packaging film is guided between an embossing cylinder and a backing, preferably a backing cylinder, wherein the embossing cylinder comprises at least one embossing die projecting from its surface. This includes the possibility of involving more than one embossing cylinder and/or more than one backing. When the packaging film is used for the manufacture of tobacco pouches, the embossing cylinder and the backing preferably are arranged in an unwinder unit which can feed the embossed packaging film to a pouch manufacturing device. This procedure uses a curved embossing die and allows for a process in which the packaging film can continuously run, without any rest intervals.

In another advantageous embodiment of the invention, the packaging film is guided between an embossing plate and a backing, the embossing plate comprising at least one embossing die projecting from its surface. The packaging film is embossed by means of the embossing plate and the backing by pressing the embossing plate onto the backing (or vice versa) during intervals when the packaging film is not moved. Preferably, the packaging film is used for the manufacture of tobacco pouches, and the embossing plate and the backing are arranged in a pouch manufacturing device. In the pouch manufacturing device, the packaging film is provided with one fold which forms, in a continuous arrangement of tobacco pouches, the lower edge of a tobacco pouch having a front side, a back side and a flap. In this state, the flap extends from the upper edge of the back side and is not opposed by any packaging film material. The packaging film is transported through the pouch manufacturing device in a stepwise manner, with intervals when it rests. During such intervals, transverse weldings are made in the packaging film, i.e. in the continuous arrangement of tobacco pouches, which weldings are adapted to form the side edges of the tobacco pouches. Preferably, transverse (lateral) welding seams run orthogonally to the fold and are set in pairs, wherein in a later step of the procedure the individual tobacco pouches are separated by cutting the packaging film in the middle of the welding seams. The intervals when the packaging film is not moved can be utilized for the embossing step. In this way, the flap of one or more than one tobacco pouch is embossed during that rest interval. In a machine, the duration of the rest interval is in the order of one second, which is sufficient to perform the embossing step. Preferably, the number of pouch sections welded at the same time is equal to the number of pouch sections embossed at the same time but, depending on the structure of the pouch manufacturing device, it is not required that each individual pouch section is welded and embossed simultaneously. The embossing tools can be attached to parts of the welding unit, but they can also be arranged or work independently from any welding device.

The backing has to cooperate with the embossing die in order to form high-quality embossings. In one version, the backing comprises a resilient material, e.g. rubber or a resilient polymer like, e.g., silicon. It is also possible to provide the backing with a female counterpart to the embossing die (which forms the male part) so that the embossing die fits into the backing, with the packaging film in between. Such design allows for a metal backing, metal being a preferred material of the embossing die as well. To a backing designed in this way, it is possible to apply a vacuum, e.g. via holes located at the surface of the female counterpart and a connecting channel, so that the packaging film can be attracted to the surface of the female counterpart, which facilitates the embossing step.

In advantageous versions of the invention, heat is applied to the areas of the packaging film to be provided with embossings, preferably via a heated embossing die and/or a heated backing. Packaging films produced from plastic material get softer and more elastic when heated, thus facilitating the embossing step and avoiding cracks or ruptures in the material. Preferred heating temperatures depend on the material of the packaging film used and are typically in the range from 80°C to 190°C, preferably from 100°C or 150°C. A particularly advantageous heating temperature is about 130°C.

The packaging film should not be heated for extended periods, because in a packaging film processing device or a pouch manufacturing device, it generally has to keep its shape, in spite of the stresses used by tension forces and other forces exerted onto the packaging film in the device. Therefore, preferably the packaging film is cooled after applying an embossing.

In an advantageous version of the invention, the embossing die and/or the backing are continuously heated. In this case, the packaging film can be cooled after applying an embossing, e.g. by means of forced air (fan) or by running the packaging film along a cooling cylinder, e.g. a cylinder having a large thermal conductivity and a large heat capacity.

As an alternative, the embossing cylinder or the embossing plate and/or a corresponding backing can be cooled by a coolant, e.g. by water, in a continuous manner, whereas the embossing die and/or the backing are pulse-heated while applying the embossings. That means, the embossing die and/or its backing are heated, e.g. for a fraction of a second, when the packaging film rests for a period in the order of one second, so that the essential parts of the embossing tools get hot when they contact the packaging film. As soon as the heating is switched off, the embossing die and/or the backing cool down because of the action of the coolant, preferably during the interval when the packaging film is still pressed between the embossing plate and the backing. So far, this procedure has been explained for the set-up when the embossing step takes place during rest intervals, but it can be used with an embossing cylinder as well, the embossing cylinder rotating with a constant velocity or in a different manner.

Preferably, the coolant has a temperature in the range from 15°C to 25°C, which is efficient enough for cooling purposes but avoids condensation of water.

The packaging film can be made of any suitable material or combination of materials and can be constituted in any suitable design known in the industry. Preferred materials are polyethylene, polypropylene or polyester, and for these materials different recipes (molecular weight, polymerisation conditions, stretching or orientation, etc.) are conceivable. Aluminium or moisture-impermeable plastic materials are conceivable as well.

The packaging film can be constituted of one layer of a certain material, but it can also comprise a laminate of two or more layers of different materials or even of the same material. A packaging film having two or more layers can be made, e.g., by co-extrusion.

Preferred examples for the materials and constitution of a packaging film, in particular for tobacco pouches, are: a laminate of 20 µm polypropylene (oriented version or a cast version) and 80 µm polyethylene (as monolayer or co-extruded layers), polyethylene of 100 µm thickness (several recipes of polyethylene as monolayer and as co-extruded layers), or a laminate of 12 µm polyester and 80 µm polyethylene. Advantageously, an additional layer of aluminium is vaporized onto a plastic monolayer or laminate as an outer layer.

Typical thicknesses of the packaging film are in the range from 50 µm to 200 µm or from 60 µm to 150 µm. Preferred values are in the range from 80 µm to 120 µm, e.g. 100 µm.

The embossings can include one level, which means that the regions of the packaging film moved out of its main plane during the embossing step are essentially in the same plane, wherein a transition region connects the regions in this plane to the main plane. On the other hand, it is also conceivable that the embossings include more than one level. In case of two levels, for example, preferably a first level has an embossing height in the range from 800 µm to 1800 µm and a second level has an additional height in the range from 600 µm to 1400 µm. An embossing designed in this way has a terrace-like appearance. With a suitable embossing die, the different levels of the embossings can be made in a single embossing step.

In the following, the invention is described in more detail by means of embodiments. The drawings show in
- Figure 1: an isometric front view of an empty tobacco pouch manufactured by the method according to the invention,
- Figure 2: an isometric back view of the tobacco pouch of Figure 1,
- Figure 3: an isometric view of the tobacco pouch of Figures 1 and 2 after filling and folding its flap,
- Figure 4: a side view of a production line including an unwinder unit, a pouch manufacturing device and a packaging device,
- Figure 5: a top view of the devices shown in Figure 4,
- Figure 6: an enlarged top view of a welding and embossing unit included in Figure 5,
- Figure 7: an isometric view of the essential parts used for embossing tobacco pouches in a welding and embossing unit like that shown in Figure 6,
- Figure 8: an isometric view of another embodiment of the essential embossing parts,
- Figure 9: an isometric view of another embodiment of the essential embossing parts,
- Figure 10: an isometric view of an embodiment of the essential parts of an embossing unit which is driven independently from a welding unit,
- Figure 11: an isometric view of another embodiment similar to that of Figure 10,
- Figure 12: an isometric view of another embodiment similar to that of Figure 10,
- Figure 13: 13 an isometric view of an embodiment of an embossing cylinder and a backing cylinder used for continuously embossing a web of tobacco pouches,
- Figure 14: an isometric view of another embodiment similar to that of Figure 13, and
- Figure 15: 15 an isometric view of another embodiment similar to that of Figure 13.

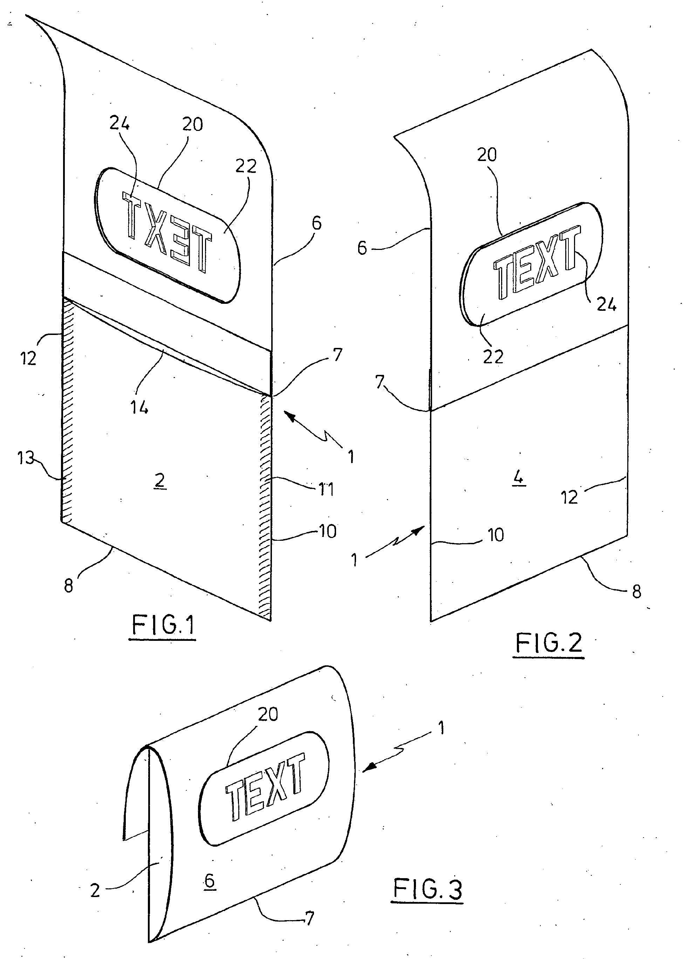

Figures 1 to 3 illustrate an embodiment of a tobacco pouch 1 which has been embossed with a logo during the manufacture of the pouch 1 by a method which is described in more detail further below.

The pouch 1 comprises a front side 2 (see Figure 1), a back side 4 (see Figure 2) and a flap 6 which extends from the upper edge 7 of the back side 4. The front side 2 and the back side 4 are connected via a fold line 8 which forms a lower edge of pouch 1.

At side edge 10, the front side 2 and the back side 4 are connected by a welding seam 11 and at the opposite side edge 12 by a welding seam 13. A mouth 14 provides access to the interior space of pouch 1 between its front side 2 and its back side 4.

In the embodiment, the embossed logo, i.e. the embossing 20, has two levels. A first level 22 has, as an example, an oval form and a preferred height in the range from 800 µm to 1800 µm. A second level 24 is superimposed to the first level 22 and has a preferred additional height in the range from 600 µm to 1400 µm. For example, it can include the brand name of the tobacco packaged in pouch 1. In the figures, it is called "TEXT". Preferably, the embossing 20 is formed in one step by moving an appropriate embossing die towards a backing (or vice versa), as explained below.

After filling pouch 1 with tobacco, preferably cut tobacco, via mouth 14, the flap 6 is folded in order to close the mouth 14, see Figure 3. In this state, the embossing 20 is well visible.

Pouch 1 is produced from a conventional packaging film, as known in the industry. The packaging film can comprise materials like polyethylene, polypropylene, polyester or aluminium and can be constituted of one layer. Typically, however, the packaging film is a laminate of two or more layers, which includes the possibility of layers of different varieties of the same basic material, e.g. the same kind of polyolefine in different molecular weight varieties or orientations. The preferred overall thickness of the packaging film is in the order of 100 µm, but different thicknesses are applicable as well.

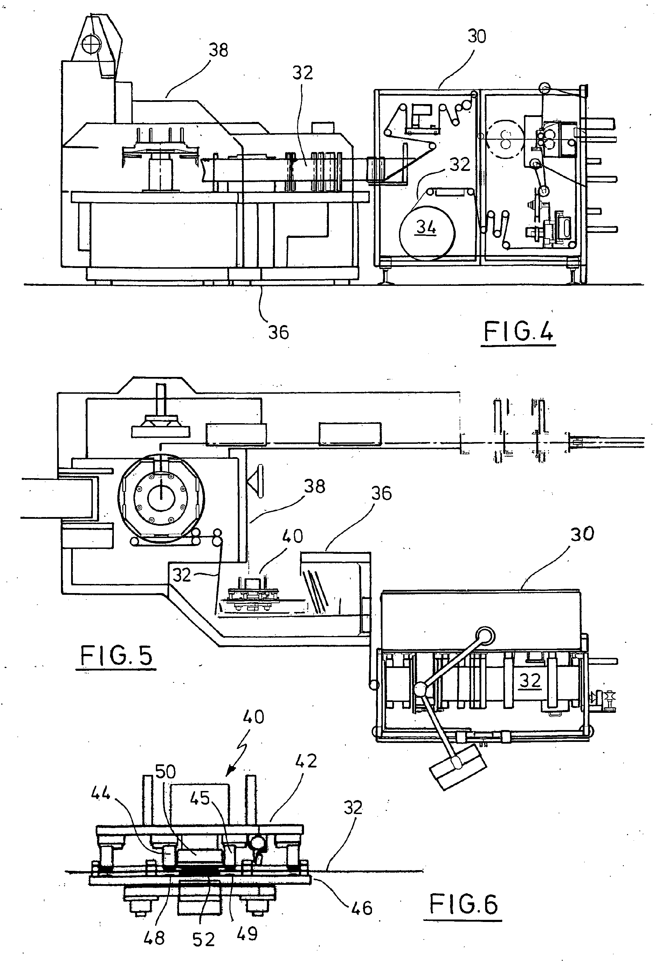

Figures 4 and 5 illustrate a production line for manufacturing and filling tobacco pouches, which includes a welding and embossing unit shown in Figure 6 in enlarged view.

The packaging film from which the tobacco pouches like pouch 1 are manufactured is delivered as a continuous web wound on a reel. In an unwinder unit 30, the packaging film 32 is unwound from the reel 34, and after further processing it is fed to a pouch manufacturing device 36 by means of a plurality of drives and guide rollers. When the pouches leave the pouch manufacturing device 36, they are still connected in a continuous arrangement along their side edges, but otherwise have already been shaped as shown in Figures 1 and 2. In a packaging device 38 the pouches are filled with cut tobacco, and they are separated along their side edges in the middle of the weldings, e.g., at side edge 10 (welding seam 11) of pouch 1 and the corresponding side edge 12 (welding seam 13) of the next pouch, see Figure 1.

When the web of packaging film 32 enters the pouch manufacturing device 36, it is provided with a fold line (fold line 8 in Figure 1). In this state, the flaps of the continuous arrangement of tobacco pouches (flap 6 in Figures 1 and 2) are not opposed by packaging film material. After folding, the arrangement of pouches is moved to a welding and embossing unit 40, see Figure 5 and the enlarged view in Figure 6. In a conventional pouch manufacturing device, this unit is used just for welding, i.e. for proving the welding seams 11 and 13. A typical welding unit comprises a fixed plate 42 with one or more, e.g. two welding bars 44 and 45 which extend orthogonally with respect to the transport direction of the web of the packaging film 32. The welding bars 44 and 45 can be heated to a temperature sufficient to soften or to melt the plastic material of the packaging film 32. Opposite to the fixed plate 42, a driven plate 46 is mounted on a drive which is able to move the driven plate 46 towards the fixed plate 42 and back in the opposite direction. On the driven plate 46, backing bars 48 and 49, e.g. covered with a resilient rubber material, are arranged opposite to the welding bars 44 and 45, respectively.

When a conventional welding unit is operated, the driven plate 46 is moved towards the fixed plate 42, thus clamping the packaging film 32 between the backing bars 48 and 49 and the welding bars 44 and 45. When the welding bars 44 and 45 are heated, welding seams like welding seams 11 and 13 of pouch 1 are formed. During this step, the packaging film 32 rests inside the welding unit. The transport in intervals inside the pouch manufacturing device 36 required for this kind of operation is made possible by means of material reservoirs in the web of packaging film 32 formed by guiding the web back and forth between adjustable rollers.

In a first embodiment of a method of embossing the packaging film 32, i.e. of making embossings like the embossing 20 in Figures 1 to 3, an embossing plate 50 comprising an embossing die projecting from its surface is fixedly mounted to the fixed plate 42, while a backing 52 is fixedly mounted to the driven plate 46. In this way, each time when the driven plate 46 is moved towards the fixed plate 42, the backing 52 is moved towards the embossing plate 50 including the embossing die, pressing the embossing die to the packaging film 32 and against the backing 52. The welding interval is about 1 second, which means that the embossings are formed in the same intervals of about one second.

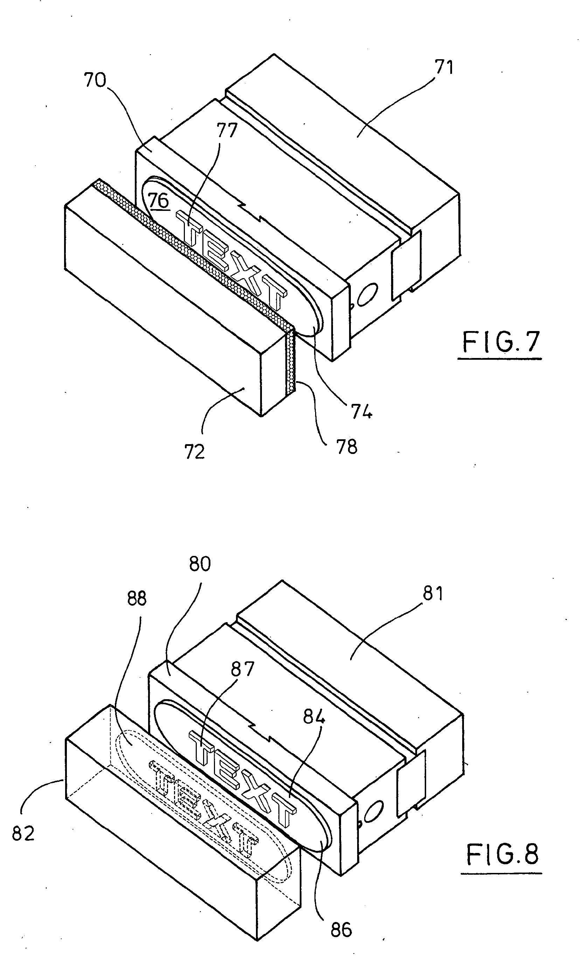

Figures 7 to 9 illustrate several embodiments of the essential parts used for embossing a packaging film. These parts can be mounted in the welding and embossing unit 40, as described by means of Figure 6.

In the embodiment according to Figure 7, an embossing plate 70 is attached to a mounting device 71. A backing 72 is arranged opposite to the embossing plate 70, the packaging film to be embossed running through the gap between embossing plate 70 and backing 72.

An embossing die 74 mounted on the embossing plate 70 has two levels, a first level 76 in order to emboss an oval background area and a second level 77, projecting more than the first level 76, for embossing, e.g., a trademark "TEXT".

The backing 72 comprises a resilient or elastic material, preferably a rubber layer 78 or a silicon layer which can resist elevated temperatures.

When operated in the welding and embossing unit 40, the backing 72 is moved towards the embossing die 74 in order to press the packaging film running in the gap between the rubber layer 78 and the embossing die 74 against the embossing die 74. In this way, an embossing like embossing 20 of Figures 1 to 3 is formed.

It is easier to deform the packaging film 32 when its temperature is raised in the embossing area so that the packaging film gets softer. For this purpose, the embossing plate 70 and/or the backing 72 can be provided with a heater which heats the packaging film to a temperature, e.g., in a range from 100°C to 150°C.

In the embodiment according to Figure 7, the heater runs continuously. Preferably, the packaging film is cooled after welding and embossing in order to avoid a change of its form due to the lower strength of warm plastic materials. The cooling can be achieved, e.g., by forced air (fans) or by one or more than one cooling cylinder which transfers heat from the packaging film when the packaging film runs along the cooling cylinder.

The embodiment shown in Figure 8 is very similar to that of Figure 7. Again, it comprises an embossing plate 80 attached to a mounting device 81 and including an embossing die 84 with a first level 86 and a second level 87. In contrast to the embodiment of Figure 7, however, the backing 82 is provided with a female counterpart 88 to the embossing die 84, as indicated in broken lines. The embossing die 84 fits into the female counterpart 88, but there is some gap left between the surfaces of the embossing die 84 and the female counter part 88 in order to allow for some thickness of the packaging film.

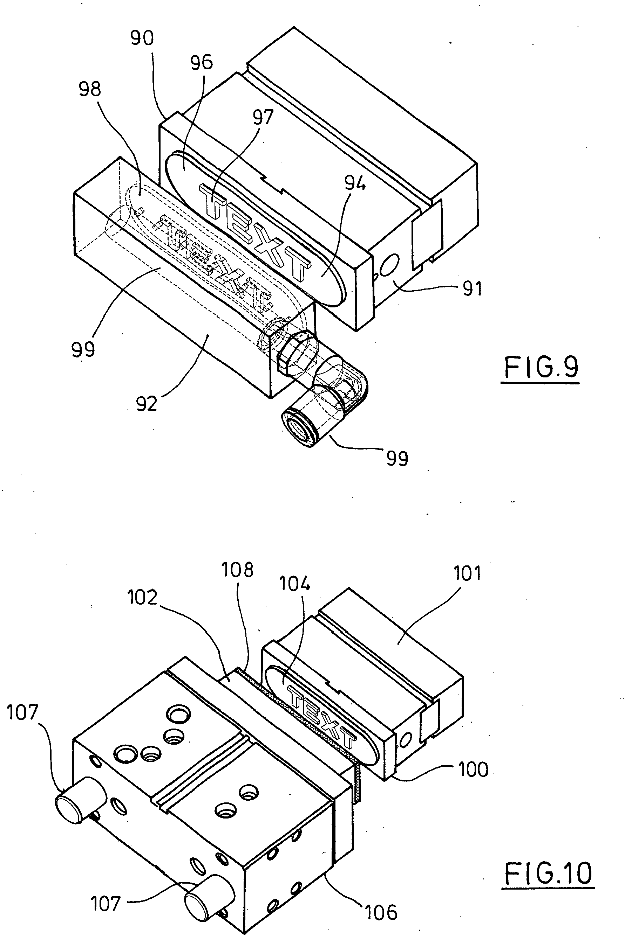

Figure 9 illustrates another embodiment of the embossing parts, i.e. an embossing plate 90 on a mounting device 91, comprising an embossing die 94 with a first level 96 and a second level 97 cooperating with a backing 92 having a female counterpart 98, which is very similar to the embodiment of Figure 8. Additionally, the backing 92 is provided with a vacuum device 99 having an outer fitting for connection to a vacuum line and a bore, shown in broken lines inside the backing 92. Between this bore and the outer surface of the female counterpart 98, there extend small channels, also shown in broken lines. By applying a vacuum to vacuum device 99, a packaging film disposed between the embossing plate 90 and the backing 92 is sucked to the surface of the female counterpart 98. This secures a safe support of the packaging film on the backing 92 and facilitates the embossing procedure.

In this embodiment, as well as in the embodiment of Figure 8, the embossing plate 90 including the embossing die 94 and/or the backing 92 are preferably heated during the embossing step, as described with reference to Figure 7. The heat transfer to the packaging film is improved when the embossing plate 90 including the embossing die 94 and the backing 92 are made of metal.

Figure 10 shows another embodiment of the embossing parts. In this case, an embossing plate 100 having an embossing die 104 is fixed to a mounting device 101, and a backing 102 comprising a rubber layer 108 is arranged opposite to the embossing die 104, as in the embodiment of Figure 7. The backing 102, however, is not mounted to the driven plate 46 of the welding and embossing unit 40, but is attached to a drive 106 (e.g., a drive involving a pneumatic actuator) guided by two guide bars 107. The guide bars 107 are fixed in the pouch manufacturing device, while the drive 106 can move along the guide bars 107.

Generally, this kind of embossing unit works independently from a welding unit. That means, the embossing period can be selected independently from the welding period, with the only constraint that the embossing period has to be shorter than the welding period because an embossing step has to be performed while the packaging film is at rest during the welding interval. A short embossing period is advantageous, however, since it allows the embossing die and/or the backing to be heated for a short period only, significantly shorter than 1 second, which largely avoids negative effects to the overall shape of the packaging film. As an additional benefit, an independently working embossing unit allows a regulation of the embossing pressure, independently from the pressure used for welding. Moreover, an independent embossing unit can be aligned in an easier way.

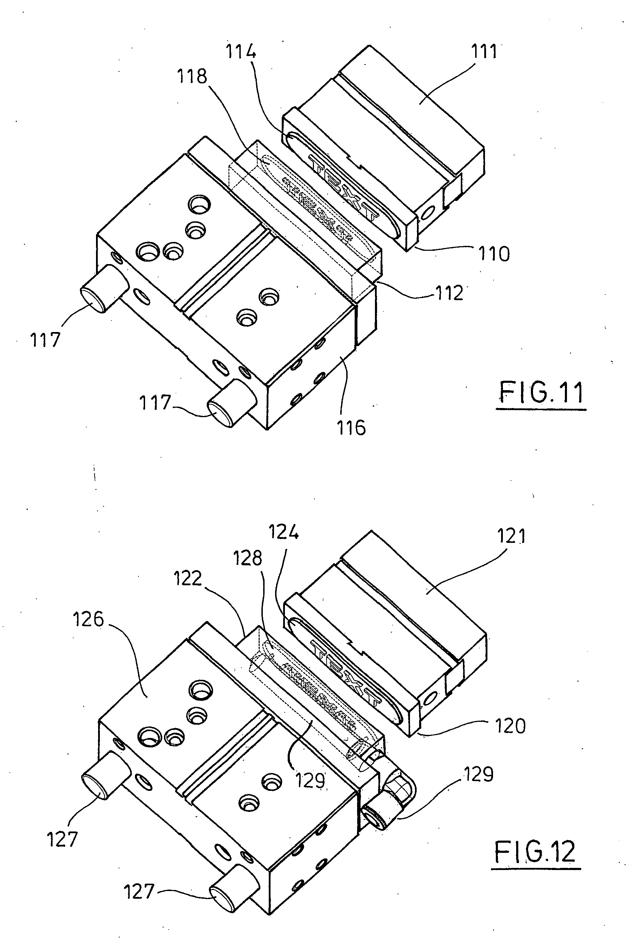

The embodiment shown in Figure 11 has elements of the embodiments of Figure 10 and Figure 8. An embossing plate 110 fixed on a mounting device 111 and having an embossing die 114 cooperates with a backing 112 provided with a female counterpart 118. The backing 112 is mounted to a drive 116 which can move the backing 112 along two guide bars 117. Again, this embodiment allows for short embossing and heating periods.

Similarly, Figure 12 illustrates an embodiment having features of the embodiments according to Figure 9 and Figure 10. An embossing plate 120 attached to a mounting device 121 and provided with an embossing die 124 is arranged opposite to a backing 122 comprising a female counterpart 128 and a vacuum device 129, which is movably mounted on guide bars 127 by means of a drive 126.

Whereas the embodiments of Figures 10 to 12 allow for short embossing and heating periods, even when the embossing dies and/or backings are permanently heated, it is also possible to achieve short heating periods in the embodiments according to Figures 7 to 9. For this purpose, the embossing plates/embossing dies 70/74, 80/84 or 90/94 and/or the backings 72, 82 or 92 are permanently cooled, preferably by means of a liquid coolant like water which is directed through internal channels provided in the corresponding parts, and are pulse-heated for a short period only. The pulse-heating can be facilitated when the heated area has only a small heat capacity, preferably the embossing die 74, 84 or 94 without heating the whole embossing plate 70, 80 or 90.

In the embodiments described so far, essentially plane embossing tools operate during intervals when the packaging film transported through the manufacturing line is at rest.

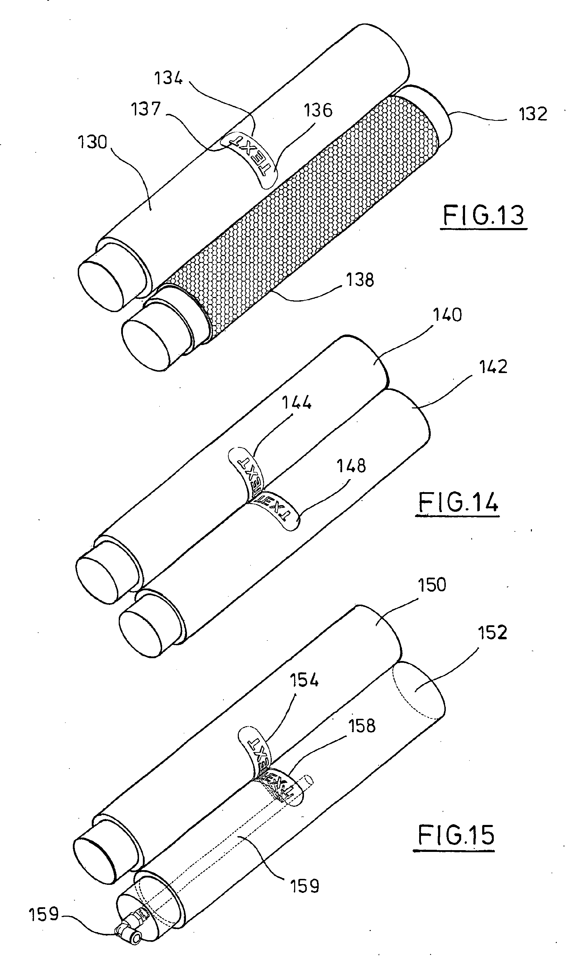

In the embodiments illustrated in Figures 13 to 15, the embossing tools are provided on cylinders, which preferably run continuously. These devices can be arranged, e.g., in the unwinder unit 30, i.e. at a position before the packaging film 32 is folded to provide the fold line 8 (Figure 1), which allows for embossing the packaging film at any position and avoids the restriction to emboss only the flaps 6 of the pouches 1.

In Figure 13, an embossing cylinder 130 cooperates with a backing cylinder 132, with a packaging film running through a small gap between the embossing cylinder 130 and the backing cylinder 132. The embossing cylinder 130 is provided with an embossing die 134 having a first level (oval) 136 and a second level ("TEXT") 137. The backing cylinder 132 is covered with a rubber layer 138, similar to the embodiment of Figure 7.

In Figure 14, an embossing die 144 of an embossing cylinder 140 fits into a female counterpart 148 of a backing cylinder 142, similar to the embodiment of Figure 8.

In Figure 15, a backing cylinder 152 having a female counterpart 158 and running against an embossing cylinder 150 having an embossing die 154 comprises a vacuum device 159 which is able to apply sub-atmospheric pressure to the surface of the female counterpart 158 in order to facilitate the procedure and to enhance the quality of the embossings.

The same options for heating and cooling as described before can be used with the embodiments according to Figures 13 to 15 too.

## Claims

1. Method of embossing a packaging film (32) used for tobacco pouches (1), wherein the packaging film (32) is unwound from a reel (34) and is provided, in sections, with embossings (20) during the feeding to and/or in a packaging film processing device (36) and/or packaging device (38) adapted to package a product in sections of the packaging film (32).

2. Method according to claim 1, **characterized in that** the packaging film (32) is guided between an embossing cylinder (130; 140; 150) and a backing, preferably a backing cylinder (132; 142; 152), wherein the embossing cylinder (130; 140; 150) comprises at least one embossing die (134; 144; 154) projecting from its surface.

3. Method according to claim 2, **characterized in that** the packaging film (32) is used for the manufacture of tobacco pouches (1) and **in that** the embossing cylinder (130; 140; 150) and the backing (132; 142; 152) are arranged in an unwinder unit (30) which preferably feeds the embossed packaging film to a pouch manufacturing device.

4. Method according to claim 1, **characterized in that** the packaging film (32) is guided between an embossing plate (50; 70; 80; 90; 100; 110; 120) and a backing (52; 72; 82; 92; 102; 112; 122), the embossing plate (50; 70; 80; 90; 100; 110; 120) comprising at least one embossing die (74; 84; 94; 104; 114; 124) projecting from its surface, and **in that** the packaging film (32) is embossed therewith during intervals when the packaging film (32) is not moved.

5. Method according to claim 4, **characterized in that** the packaging film (32) is used for the manufacture of tobacco pouches (1) and **in that** the embossing plate (50; 70; 80; 90; 100; 110; 120) and the backing (52; 72; 82; 92; 102; 112; 122) are arranged in a pouch manufacturing device (36).

6. Method according to claim 5, **characterized in that** in the pouch manufacturing device (36) the packaging film (32) is provided with one fold (8) forming, in a continuous arrangement of tobacco pouches, the lower edge of a tobacco pouch (1) having a front side (2), a back side (4) and a flap (6) extending from the upper edge (7) of the back side (4) and not opposed by packaging film material, wherein during an interval when the packaging film (32) is not moved transverse weldings (11, 13) are made in the continuous arrangement of tobacco pouches, which weldings are adapted to form the side edges (10, 12) of the tobacco pouches (1), and **in that** the flap (6) of one or more than one tobacco pouch (1) is embossed during said interval.

7. Method according to claim 6, **characterized in that** the embossing plate (50; 70; 80; 90) and/or the backing (52; 72; 82; 92) are arranged on parts (42, 46) used in the welding step.

8. Method according to claim 6, **characterized in that** the embossing plate (100; 110; 120) and/ore the backing (102; 112; 122) are operated independently from the parts used in the welding step.

9. Method according to one of claims 2 to 8, **characterized in that** the backing (72; 102; 132) comprises a resilient material (78; 108; 138), preferably rubber and/or silicon.

10. Method according to one of claims 2 to 9, **characterized in that** the backing (82; 92; 112; 122; 142; 152) comprises a female counterpart (88; 98; 118; 128; 148; 158) to the embossing die (84; 94; 114; 124; 144; 154).

11. Method according to claim 10, **characterized in that** a vacuum is applied to the backing (92; 112; 152), attracting the packaging film (32) during the embossing step.

12. Method according to one of claims 1 to 11, **characterized in that** heat is applied to the areas of the packaging film (32) to be provided with embossings (20), preferably via a heated embossing die (74; 84; 94; 104; 114; 124; 134; 144; 154) and/or a heated backing (52; 72; 82; 92; 102; 112; 122; 132; 142; 152).

13. Method according to claim 12, **characterized in that** the heated areas of the packaging film (32) are heated to a temperature in the range from 80°C to 190°C, preferably from 100°C to 150°C, most preferred to about 130°C.

14. Method according to claim 12 or 13, **characterized in that** the packaging film (32) is cooled after applying an embossing (20).

15. Method according to one of claims 12 to 14, **characterized in that** the embossing die (74; 84; 94; 104; 114; 124; 134; 144; 154) and/or the backing (52; 72; 82; 92; 102; 112; 122; 132; 142; 152) are continuously heated.

16. Method according to claim 15, **characterized in that** the packaging film (32) is cooled after applying an embossing (20) by means of forced air and/or by running the packaging film (32) along a cooling cylinder.

17. Method according to one of claims 12 to 14, charaterized in that the embossing cylinder or plate (50; 70; 80; 90; 100; 110; 120; 130; 140; 150) and/or the backing (52; 72; 82; 92; 102; 112; 122; 132; 142; 152) are cooled, preferably continuously cooled, by a coolant, preferably water, the preferred temperature range being from 15°C to 25°C, and in that the embossing die (74; 84; 94; 104; 114; 124; 134; 144; 154) and/or the backing (52; 72; 82; 92; 102; 112; 122; 132; 142; 152) are pulse-heated while applying embossings (20).

18. Method according to one of claims 1 to 17, **characterized in that** the packaging film (32) comprises at least one of the following materials: polyethylene, polypropylene, polyester, aluminium.

19. Method according to one of claims 1 to 18, **characterized in that** the packaging film (32) comprises a single- or multilayer material, preferably a laminate of two or more layers.

20. Method according to one of claims 1 to 19, **characterized in that** the packaging film (32) has a thickness in the range from 50 µm to 200 µm or in the range from 60 µm to 150 µm, preferably in the range from 80 µm to 120 µm, most preferred of about 100 µm.

21. Method according to one of claims 1 to 20, **characterized in that** the embossings (20) include one ore more than one level (22, 24), preferably a level (22) having an embossing height in the range from 800 µm to 1800 µm and an optional second level (24) having an additional height in the range from 600 µm to 1400 µm.

22. Apparatus adapted to perform the method defined in one of claims 1 to 21.

23. Apparatus according to claim 22, **characterized by** an embossing cylinder (130; 140; 150) and a backing, preferably a backing cylinder (132; 142; 152), wherein the embossing cylinder (130; 140; 150) comprises at least one embossing die (134; 144; 154) projecting from its surface, the embossing cylinder (130; 140; 150) and the backing (132; 142; 152) being arranged in an unwinder unit (30) adapted to unwind a packaging film (32) from a reel (34) and preferably to feed embossed packaging film (32) to a tobacco pouch manufacturing device.

24. Apparatus according to claim 22, **characterized by** an embossing plate (50; 70; 80; 90; 100; 110; 120) and a backing (52; 72; 82; 92; 102; 112; 122), the embossing plate (50; 70; 80; 90; 100; 110; 120) comprising at least one embossing die (74; 84; 94; 104; 114; 124) projecting from its surface, the embossing plate (50; 70; 80; 90; 100; 110; 120) and the backing (52; 72; 82; 92; 102; 112; 122) being arranged in a tobacco pouch manufacturing device (36).

25. Apparatus according to claim 23 or 24, **characterized in that** the backing (72; 102; 132) comprises a resilient material (78; 108; 138), preferably rubber and/or silicon.

26. Apparatus according to one of claims 23 to 25, **characterized in that** the backing (82; 92; 112; 122; 142; 152) comprises a female counterpart (88; 98; 118; 128; 148; 158) to the embossing die (84; 94; 114; 124; 144; 154).

27. Apparatus according to claim 26, **characterized by** means (99; 129; 159) adapted to apply a vacuum to the backing (92; 112; 152), attracting a packaging film (32) during an embossing step.

28. Apparatus according to one of claims 23 to 27, **characterized by** a heater associated with the embossing die (74; 84; 94; 104; 114; 124; 134; 144; 154) and/or the backing (52; 72; 82; 92; 102; 112; 122; 132; 142; 152).

29. Apparatus according to one of claims 23 to 28, **characterized by** a cooling device associated with the embossing die (74; 84; 94; 104; 114; 124; 134; 144; 154) and/or the backing (52; 72; 82; 92; 102; 112; 122; 132; 142; 152).

30. Tobacco pouch, manufactured involving the method according to one of claims 1 to 21.

31. Tobacco pouch, comprising a packaging film (32) and having a front side (2), a back side (4) and a flap (6), **characterized by** an embossing (20).

32. Tobacco pouch according to claim 31, **characterized in that** the embossing (20) has been provided by means of the method according to one of claims 1 to 21.
